# EUROPEAN PATENT SPECIFICATION

(11) **EP 4 490 999 B1**
(45) Date of publication and mention of the grant of the patent: **09.12.2026**
(21) Application number: 24208225.3
(22) Date of filing: 29.03.2021
(51) Int. Cl.: A01B 33/08, A01B 23/04, A01B 59/00, A01B 59/06, G01L 5/00, G01L 3/02, A01B 73/02

(54) **AGRICULTURAL MACHINE WITH ELECTRONIC CONTROL AND RELEVANT OPERATING METHOD**
LANDWIRTSCHAFTLICHE MASCHINE MIT ELEKTRONISCHER STEUERUNG UND ENTSPRECHENDES BETRIEBSVERFAHREN
MACHINE AGRICOLE À COMMANDE ÉLECTRONIQUE ET PROCÉDÉ DE FONCTIONNEMENT ASSOCIÉ

(30) Priority: 27.03.2020 IT 202000006535; 04.12.2020 IT 202000030032
(43) Date of publication of application: 15.01.2025
(62) Document number(s) of the earlier application(s) in accordance with Art. 76 EPC: 21722281.9 / 4 125 313
(73) Proprietor: Maschio Gaspardo S.p.A., 35011 Campodarsego (PD) (IT)
(72) Inventor: MASCHIO, Andrea, 33075 Morsano al Tagliamento (PN) (IT); BARALDI, Paolo, 35137 Scorzé (VE) (IT); FAGNANI, Francesco, 36051 Creazzo (VI) (IT)
(74) Representative: Milan, Guglielmo

(56) References cited:
- EP-A1- 1 763 980
- DE-A1- 102013 011 694
- DE-A1- 19 943 208
- DE-A1- 3 816 828

## Description

The present invention relates to the field of agricultural machines with electronic control.

There is perceived the need to connect different agricultural machines by means of an electronic control system. Typically, this control system is carried out according to an Isobus protocol. This protocol is standardized in order to control the communication between tractors, software and equipment items in order to allow an exchange of data and information items with a universal language by means of a single control console which is integrated in the cabin of the tractor.

In particular, the present invention relates to the field of agricultural machines which are provided or intended to be provided for an Isobus connection and which are actuated by the power take-off of an agricultural tractor by suitable shafts and gearboxes.

In such machines, there is perceived the problem of allowing the detection of parameters correlated with the torque and the power transmitted by the power take-off of the tractor to the driven members of the agricultural machine.

For example, the document DE 3816828 describes a bevel gear with angled transmission for actuating agricultural machines with a movement input shaft, a movement output shaft and a device for measuring the coordinated couple at the input shaft or the output shaft. There is particularly provision for a casing which is provided with flanged support members for a conical toothed wheel, in which there is integrated the device for measuring the couple which is provided as a device operating without any contacts and which is mounted between two bearings which are provided in the support member for mounting one of the shafts.

Additional examples of devices for detecting a mechanical stress are described in CN 204495501, CN 108489657, CN 107421676 or US 2018220574.

In this context, the invention can better be used in the field of agricultural machines with foldable frames, wherein at least one lateral frame is hinged to a central frame and can generally be moved by means of fluid-dynamic actuators between an operating position (or working position) and a transport position, in which the agricultural machine takes up maximum and minimum dimensions, respectively.

In such machines, there is perceived inter alia the technical problem of jamming of the transmission shafts between the central gearbox and the transmission boxes on each lateral frame, which may cause damage to and breakage of the universal movement transmission joints as a result of the manoeuvring operations between the above-mentioned positions.

Examples of agricultural machines with foldable frames are described in DE102013011694A1, DE19943208A1, or EP1763980A1.

The technical problem addressed by the present invention is to provide a machine which is structurally and functionally configured to at least partially overcome one or more of the disadvantages set out with reference to the cited prior art.

This problem is solved by the invention by means of a rotary harrow with a foldable frame according to one or more of the appended claims, wherein the rotary harrow comprises a central frame which carries flanges which are capable of configuring a three-point attachment for a hydraulic lift of an agricultural tractor and two lateral frames which are articulated to the central frame about respective hinges and which can be pivoted between an operative position in which the lateral frames are lowered with a substantially coplanar arrangement, and a transport position with an arrangement in which they are raised.

A plurality of rotors with respective implements is mounted on each of the lateral frames. The rotors are motorized by means of respective secondary gearboxes which are provided with movement output axes. The secondary gearboxes in turn draw movement from a central gearbox which is mounted on a support of the central frame.

Two proximity sensors are provided between the central gearbox and lateral universal joint shafts which connect the movement outputs thereof to the secondary gearboxes. The proximity sensors are configured to read the angular position of the lateral universal joint shafts during a closure step of the rotary harrow so as to prevent breakages caused by jamming of the shafts. According to some embodiments of the invention as set out in one or more of the dependent claims, the rotary harrow is further configured for measuring by means of a torque meter the counter-torque applied between the gearbox and the central frame of the operating machine while the tractor operates the machine itself by means of the power take-off (PTO).

This measure is preferably carried out by means of one or more load cell(s) which is/are interposed between the gearbox and the frame.

Both load cells of the electronic type and cells of the hydraulic and/or electrohydraulic type are suitable for this purpose. In preferred embodiments, the cell is of the shear beam or button type.

With a particular assembly with a bracket hinged both to the frame of the machine and to the gearbox, it is possible for the torque meter which acts as a hinge pin of the bracket to be isostatic at least in the measuring state. Advantageously, the torque meter is arranged so as to measure the counter-torque between the gearbox and the frame which supports it with reference to a movement input axis in the gearbox or a movement output axis from the gearbox.

In an embodiment, the torque meter comprises an upper plate and a lower plate, of which one is secured to the gearbox and the other is secured to the frame, the upper plate and the lower plate being secured to each other with hinge type constraints in accordance with two axes which are mutually parallel and substantially parallel with the movement input axis or the movement output axis, one of the hinge type constraints including the load cell.

It may be noted that, advantageously, the axes of the hinge type constraints are spaced apart from each other in such a manner that the hinge type constraints can act counter to the rotation of the plates about the axes. According to another advantageous aspect, the axes of the hinge type constraints are substantially parallel with the positioning plane of the plates or the positioning plane of at least one of the plates.

Preferably, the plates are secured to each other with hinge type constraints in accordance with only two axes which are mutually parallel. Even more preferably, only one of the hinge type constraints includes the load cell.

In a construction variant of the invention, there is provision for the other of the hinge type constraints to be positioned with respect to the corresponding movement input or output axis so as to minimize the torque generated with respect to the corresponding movement input or output axis by a thrust directed along this movement input or output axis. In this manner, the disruption signal introduced into the torque measurement by the axial thrusts of the universal joints is minimized.

If the other of the hinge type constraints is arranged to identify a hinge axis which substantially intersects orthogonally with the corresponding movement input or output axis, the above-mentioned disruption signal is cancelled by the effect of the cancellation of the arm between the axial thrust of the universal joints and the hinge axis.

In one aspect, the present disclosure relates to a kit for a folding harrow comprising an upper plate and a lower plate which are juxtaposed, spaced apart and secured with respect to each other with hinge type constraints in accordance with two mutually parallel axes, the axes being configured to be arranged parallel with a movement input axis into a gearbox of the folding harrow or a movement output axis out of the gearbox, one of the hinge type constraints including a load cell, the kit being arranged to be interposed between the gearbox and a support frame thereof in place of a horizontal alignment spacer of lateral shafts with a universal joint of the folding harrow.

It may be noted that, in this context, the term "frame" preferably refers to a frame which is suitable for connecting at least one agricultural implement.

The features and advantages of the invention will be better appreciated from the following detailed description of a preferred though non-limiting embodiment and application thereof which is illustrated by way of non-limiting example with reference to the appended drawings, in which:
- Figure 1 is a general perspective view of a rotary harrow with a foldable frame in a working position;

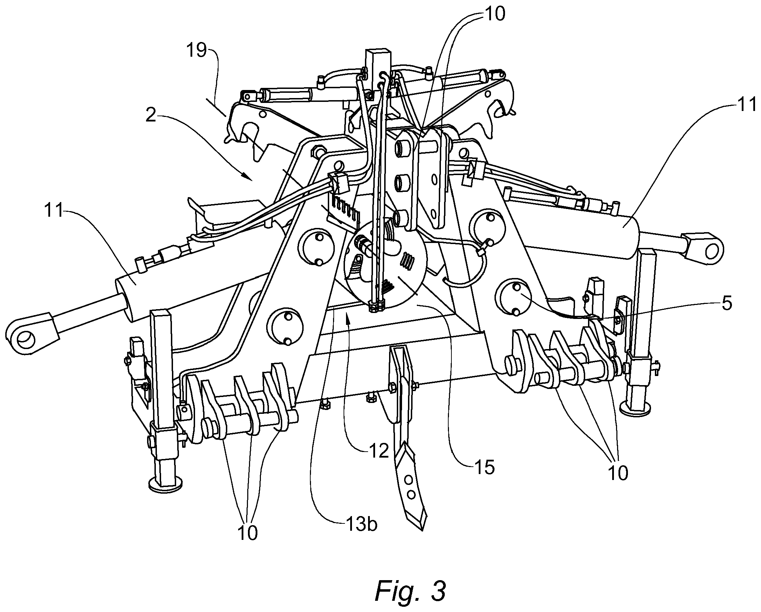

- Figures 2 and 3 are rear and front perspective views, respectively, of a detail relating to a central frame and a gearbox of the harrow of Figure 1;
- Figure 4 is a perspective view of the detail indicated by the arrow 12 of Figure 2;
- Figure 5 is a perspective view of a spacer;
- Figure 6 is a front partially-sectioned elevation view of a second embodiment of the invention;
- Figure 7 is a perspective view of a detail of Figure 6.

In the Figures, 1 generally indicates a rotary harrow with a foldable frame. The disclosure is further used in harrows with fixed frames or more generally in agricultural machines including a frame and a gearbox which is supported on the frame in order to be actuated by means of the PTO of an agricultural tractor generally via a transmission shaft with a double universal joint. Such machines may, for example, include milling cutters or the like.

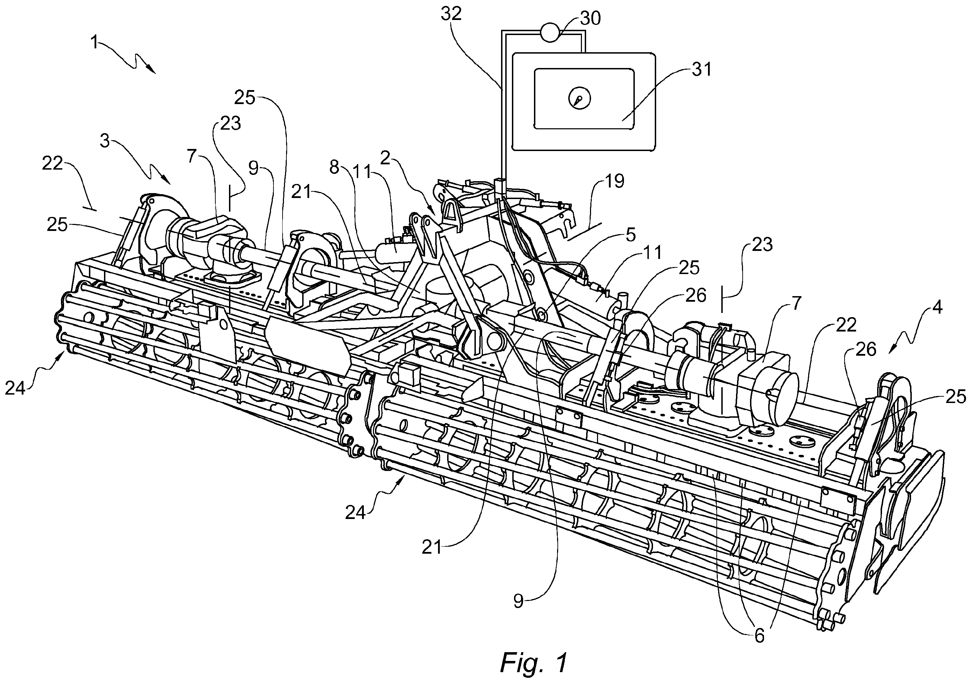

The harrow 1 comprises a frame or central frame 2 which carries flanges 10 which are capable of configuring a three-point attachment for a hydraulic lift of an agricultural tractor and two lateral frames 3, 4 which are articulated to the central frame about respective hinges 5 and which can be pivoted between an operative position (illustrated in Figure 1), in which the lateral frames are lowered with a substantially coplanar arrangement, and a transport position, in which they are raised with an arrangement which is preferably mutually parallel, with a minimal transverse spatial requirement of the machine 1.

A plurality of rotors with relevant implements 6 is mounted on each of the lateral frames 3 and 4.

Those rotors are motorized by means of respective secondary gearboxes 7 which are provided with movement output axes 23. The secondary gearboxes 7 in turn draw movement from a primary or central gearbox 8 which is mounted on a support 15 of the central frame 2.

The connection between the gearboxes 7, 8 and preferably between the central gearbox 8 and the power take-off of an agricultural tractor is brought about by means of universal joint shafts 9.

According to another aspect, for moving the lateral frames 3, 4 there may be provided fluid-dynamic cylinders 11 between the central frame 2 and the respective lateral frames 3, 4.

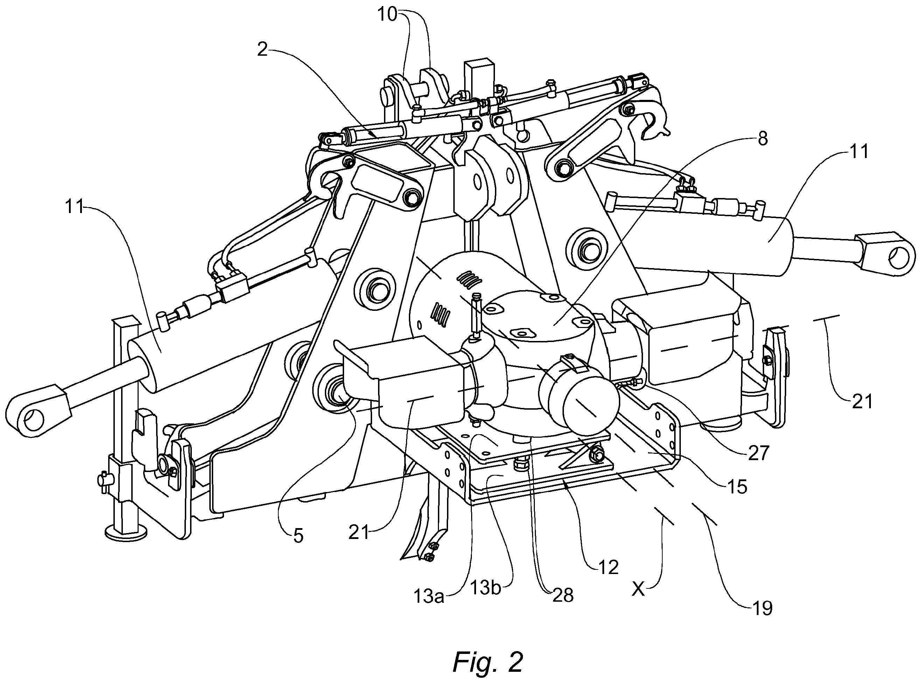

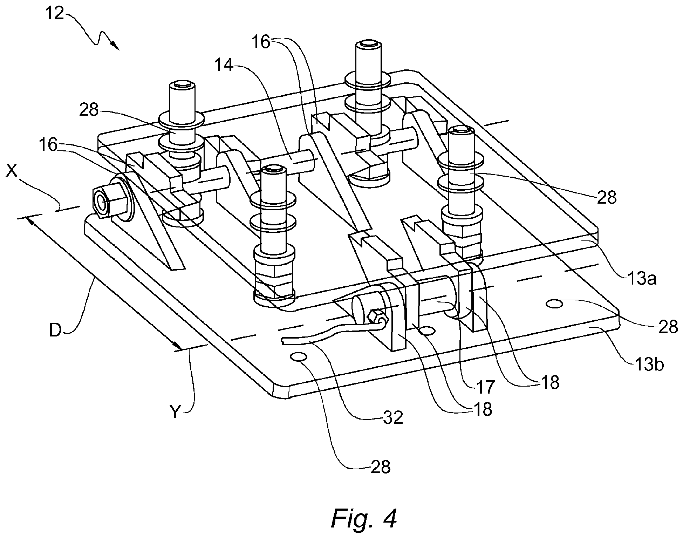

There is interposed between the central gearbox 8 and the central frame 2 a torque meter 12 according to some embodiments of the invention, as shown in Figure 2. In some embodiments, this torque meter 12 comprises a pair of upper and lower plates 13a, 13b, respectively, of which one is secured to the gearbox 8 and the other is secured to the frame 2. As better illustrated in Figure 4, the two plates 13a, 13b are preferably secured to each other with hinge type constraints 14, 17.

Preferably, along one side, the two plates 13a, 13b are hinged by means of a hinge pin 14 which extends through holes which are provided in pairs of flanges 16. The plates 13a, 13b can advantageously be connected to each other at the side opposite the pin 14 by means of a load cell 17 with a pin which extends into respective coaxial holes of second flanges 18 and which blocks the raising of the plates 13a, 13b.

By way of example, the shear beam cells are used to measure the loads applied to pulleys, hoists, cranes and weighing installations which may be integrated in overhead cranes.

The axes X and Y of the pins 14 and 17, respectively, are parallel and spaced apart (cf., for example, the spacing D in Figure 4) so that the torque meter 12 carries out an isostatic system when viewed from a plane which is transverse to the axes X, Y mentioned above. Preferably, the axes X and Y are further parallel with the movement input axis 19 into the central gearbox 8 so that the counter-torque generated by the power which is supplied via the gearbox 8 and which is discharged to the central frame 2 passes through the load cell 17.

In preferred embodiments, this load cell is provided with extensometers (not illustrated) and is therefore capable of measuring the shearing force which extends through it. With this force being known and knowing the geometry of the plates 13a, 13b and the pins 14, 17, therefore, it is readily possible to calculate the torque and the power supplied via the central gearbox 8.

In an embodiment, the axes X and Y can be parallel with at least one of the movement output axes 21 from the central gearbox 8. In this manner, the torque meter 12 can measure the counter-torque between the gearbox 8 and the frame 2 which supports it with reference to a movement output axis 21 from the central gearbox 8.

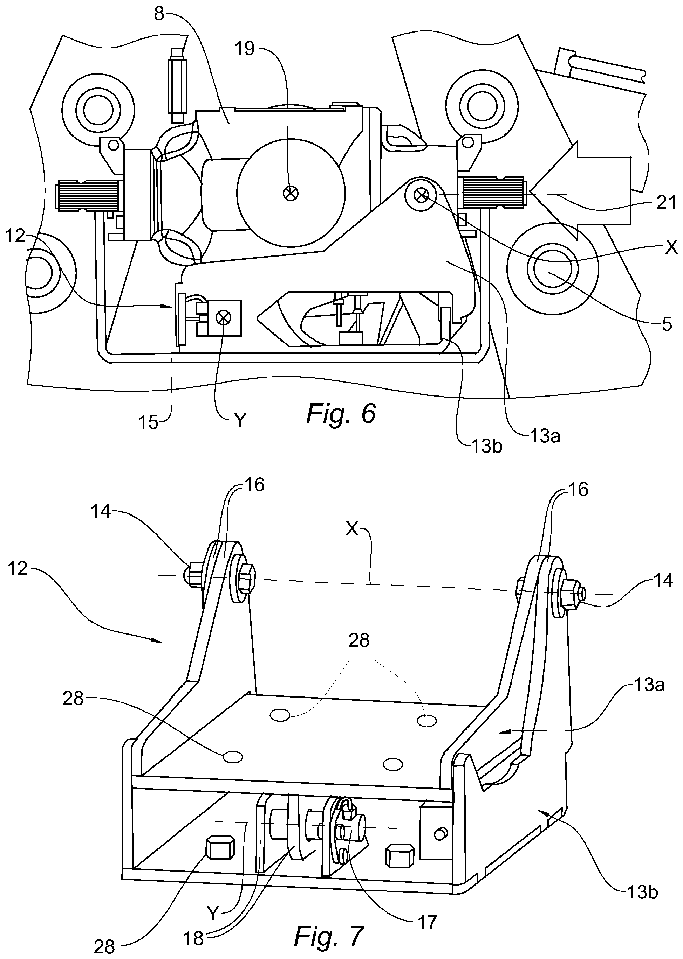

In Figures 6 and 7, the upper plate 13a and lower plate 13b are secured to each other with hinge type constraints 14, 17 in accordance with two axes X, Y which are mutually parallel but which are arranged in such a manner that one of the hinge type constraints includes the load cell 17 and the other of the hinge type constraints is positioned with respect to the corresponding movement output axis 21 so as to minimize the torque generated with respect to the corresponding movement output axis by a force directed in accordance with this axis. Reference has been made to the movement output axis but the result can be achieved similarly with reference to the movement input axis 19, where the torque to be analysed is this one.

Preferably, the other of the hinge type constraints 14 is arranged to identify a hinge axis X which substantially intersects orthogonally with the corresponding movement input or output axis.

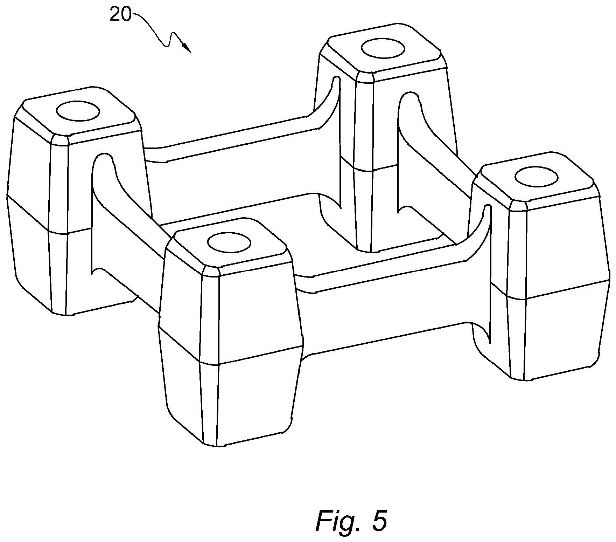

Preferably, the torque meter 12 is constructed with such a geometry as to be interchangeable (and therefore, to be able to replace without other adaptations), a spacer 20 (shown in Figure 5) which is normally used in conventional foldable harrows in order to space the assembly of the central gearbox 8 on the support 15 of the central frame 2 in order to level and align the movement output axes 21 from the central gearbox 8 with the movement input axes 22 of the secondary gearboxes 7, or to level the universal joint shafts 9 which connect them.

It may be observed that the torque meter 12 of some embodiments of this invention can be constructed in the form of a kit suitable for both the initial equipping of an agricultural machine 1 and potential retrofitting of conventional machines which are normally provided with the spacer 20 for levelling the gearbox 8. In this case, it is simply necessary to replace the spacer 20 with the above-mentioned kit.

According to an optional feature of the invention, the torque meter 12 comprises means 28 for reversible fixing to the gearbox 8, at one side, and to the frame 2, at the other. Preferably, the fixing means 28 are configured to cooperate with respective fixing counter-means which are provided on the gearbox 8 and on the frame 2.

In a preferred embodiment, the fixing means 28 are defined in the plates 13a, 13b. In this embodiment, the upper plate 13a and lower plate 13b comprise means for reversible fixing to the gearbox 8 and the frame 2, respectively, or vice versa.

Advantageously, the fixing means 28 include fixing openings or holes which are defined in the plates 13a, 13b. It may be noted that, preferably, the fixing holes are different from the mutual hinging holes of the plates themselves. According to another advantageous aspect, the fixing counter-means also include fixing openings or holes which are defined in the gearbox 8 and in the frame 2 in positions corresponding to those of the fixing openings or holes of the plates 13a, 13b.

For example, one or more fixing holes can be provided through each of the plates 13a, 13b. The fixing holes may be through-holes or may be blind holes. In a preferred embodiment, the fixing holes are suitable for receiving bolts or other connection means, preferably of the threaded type, in order to reversibly fix the plates 13a, 13b to the gearbox 8 at one side and to the frame 2 at the other side, respectively, or vice versa.

In some embodiments, the holes for fixing to the frame 2 or the gearbox 8 in the plates 13a, 13b are constructed according to the same masks of the fixing holes of a conventional levelling spacer 20 and the overall thickness is identical so that the replacement can also be carried out by a non-skilled operator. In one aspect, the torque meter 21 is inserted in the machine 1 by securing the upper plate 13a to the central gearbox 8 and by securing the lower plate 13b to the support 15 of the central frame 2. Preferably, the torque meter 12 is inserted into the machine 1 in a manner parallel with the direction of the movement input axis 19 in the central gearbox 8.

The kit can be assembled in line and does not require any calibration, the torque measurement being brought about simply by the geometric parameters thereof. With this technical solution, it is possible to continuously measure the torque transmitted which in turn allows the measured data to be stored in a mass memory 30 in order to generate a historical archive which can be interrogated. It is thereby possible to cause data from other sensors which are fitted to the machine 1 to converge in the memory 30, for example, temperature sensors of the gearbox 7, 8, the function of which is to provide historical data of the operating temperature of each gearbox/branch and to generate alarms in the event of a predetermined thermal threshold being exceeded. There are further provided three rotation sensors, one for each universal joint shaft 9, which will control the possible intervention of the torque limiters in the event of occurrences of over-consumption.

In the rear portion of the harrow 1, there is preferably provided at least one roller 24, the position of which can be adjusted by means of hydraulic actuators 25 in order to vary the working depth of the implements 6. Advantageously, the hydraulic actuators 25 are configured to be blocked by means of blocking valves 26. Each roller is preferably provided with a position transducer (not shown) which detects the course of the adjustment hydraulic actuators 25 and consequently detects the working depth of the implements 6. Two additional proximity sensors 27 (of which one is indicated in Figure 2) are provided between the central gearbox 8 and the universal joint shafts 9 which connect the movement outputs thereof to the secondary gearboxes 7. These proximity sensors 27 are used to read the angular position of the lateral universal joint shafts 9 during the closure step of the machine 1, preventing breakages caused by jamming of the shafts.

In an aspect, the historical archive of the mass memory 30 can be interrogated by means of an Isobus terminal or monitor 31 which is part of the command console integrated in the cabin of the tractor or forming part of the above-mentioned kit. Preferably, the kit includes a communication connection 32 by means of a communication protocol (for example, Isobus). The Isobus terminal 31 allows integrated control of the information items which are stored in the mass memory 30, using an Isobus protocol, that is to say, using a universal language which allows communication between tractors, software and equipment items. Advantageously, the measurements stored in the mass memory can be used to monitor the degree of use of the machine. For example, it is possible to display on the Isobus monitor 31 information items, such as the consumption of power, the working depth, or different alarms. It is possible with the storage and integrated control of the information items also to control the maintenance activities of the harrow 1, and in particular the possible extension of a warranty because the data relating to malfunctions and overloads which are not adequately controlled by the operator will be detected and stored.

In one aspect, the present disclosure relates to an agricultural machine 1 including a frame 2 which is suitable for connecting an agricultural implement and a gearbox 8 which is supported in the frame 2 and having at least one movement input axis 19 and at least one movement output axis 21, characterized in that there is interposed between the gearbox 8 and the frame 2 a torque meter 12 which is arranged so as to measure the counter-torque between the gearbox 8 and the frame 2 which supports it with reference to the movement input axis 19 or the movement output axis 21 at least in a working condition of the agricultural machine 1.

Preferably, the torque meter 12 includes a load cell 17 which is interposed between the gearbox 8 and the frame 2.

Preferably, the torque meter 12 includes a load cell 17 of the electronic and/or hydraulic type.

Preferably, the torque meter 12 includes a load cell 17 of the shear beam or button type.

Preferably, the torque meter 12 is isostatic at least in the measuring state.

Preferably, the torque meter 12 comprises an upper plate 13a and a lower plate 13b, of which one is secured to the gearbox 8 and the other is secured to the frame 2, the upper plate 13a and the lower plate 13b being secured to each other with hinge type constraints 14, 17 in accordance with two axes X, Y which are mutually parallel and substantially parallel with the movement input axis 19 or the movement output axis 21, one of the hinge type constraints 14, 17 including a load cell 17.

Preferably, the other of the hinge type constraints 14 is positioned with respect to the corresponding movement input or output axis 19, 21 so as to minimize the torque generated with respect to the corresponding movement input or output axis by a thrust directed along this movement input or output axis.

Preferably, the other of the hinge type constraints 14 is arranged to identify a hinge axis X which substantially intersects orthogonally with the corresponding movement input or output axis.

Preferably, the hinge type constraint including the load cell 17 is of the type with a hinge pin.

Preferably, the upper plate 13a and the lower plate 13b constitute a system for levelling the gearbox 8 on the frame 2.

Preferably, there is provided at least one sensor which is selected from a temperature sensor of the gearbox 8 and at least one rotation sensor of a movement input axis 19, 22 or a movement output axis 21, 23 of the gearbox 8 or of a secondary gearbox 7.

Preferably, the frame 2 supports a plurality of implements 6.

Preferably, the agricultural machine 1 comprises two lateral frames 3, 4 which are articulated to a central frame 2, the implements 6 being supported on the lateral frames 3, 4.

In another aspect, the present disclosure relates to a kit for an agricultural machine 1 including a torque meter 12 which is capable of being interposed between a gearbox 8 of the agricultural machine 1 and a frame 2 of the agricultural machine 1 which is suitable for connecting an agricultural implement, the torque meter 12 being arranged so as to measure the counter-torque between the gearbox 8 and the frame 2 which supports it with reference to a movement input axis 19 into the gearbox 8 or a movement output axis 21 out of the gearbox 8 at least in a working condition of the agricultural machine 1, the torque meter 12 comprising an upper plate 13a and a lower plate 13b with means 28 for reversible fixing to the gearbox 8 and the frame 2, respectively, or vice versa, the plates 13a, 13b being juxtaposed, spaced apart and secured to each other with hinge type constraints 14, 17 in accordance with two axes X, Y which are spaced apart from and parallel with each other, the axes X, Y being configured to be arranged parallel with the movement input axis 19 or the movement output axis 21, one of the hinge type constraints including a load cell 17, the kit including a communication connection 32 by means of a communication protocol.

Preferably, the protocol is an Isobus protocol.

Preferably, the kit is provided to be mounted in accordance with a levelling shim of the gearbox 8 on the relevant frame 2.

In another aspect, the present disclosure relates to a method for controlling the agricultural machine 1, wherein, when the agricultural machine 1 is in a working condition, the torque meter 12 measures the counter-torque between the gearbox 8 and the frame 2 which supports it with reference to the movement input axis 19 or the movement output axis 21.

Preferably, the measurements carried out by the torque meter 12 and where applicable by the at least one sensor are stored in a mass storage 30 and are used to calibrate, on the basis of the data themselves, the maintenance operations on the machine 1 and/or to monitor the degree of use of the machine 1.

The invention thereby solves the problem set out by achieving a number of advantages, including:
- measurement of the torque continuously;
- possibility of interrogating the historical archive of the data;
- compatibility with the Isobus protocol and with the products provided with the protocol;
- compatibility with agricultural machines currently available;
- simplicity of assembly in line and without calibration;
- greater reliability of the agricultural machine over time;
- possibility of using information items useful for preventive and/or predictive maintenance.

## Claims

1. A rotary harrow (1) with a foldable frame, the rotary harrow comprising a central frame (2) which carries flanges (10) which are capable of configuring a three-point attachment for a hydraulic lift of an agricultural tractor and
two lateral frames (3, 4) which are articulated to the central frame about respective hinges (5) and which can be pivoted between an operative position in which the lateral frames are lowered with a substantially coplanar arrangement, and a transport position with an arrangement in which they are raised;
wherein a plurality of rotors with respective implements (6) is mounted on each of the lateral frames (3, 4), the rotors being motorized by means of respective secondary gearboxes (7) which are provided with movement output axes (23), wherein the secondary gearboxes (7) in turn draw movement from a central gearbox (8) which is mounted on a support (15) of the central frame (2);
**characterized in that** two proximity sensors (27) are provided between the central gearbox (8) and lateral universal joint shafts (9) which connect the movement outputs thereof to the secondary gearboxes (7), the proximity sensors (27) being configured to read the angular position of the lateral universal joint shafts (9) during a closure step of the rotary harrow (1) so as to prevent breakages caused by jamming of the shafts.

2. A rotary harrow (1) according to claim 1, wherein the central gearbox (8) which is supported in the central frame (2) has at least one movement input axis (19) and at least one movement output axis (21), there being interposed between the central gearbox (8) and the central frame (2) a torque meter (12) which is arranged so as to measure the counter-torque between the central gearbox (8) and the central frame (2) which supports it with reference to the movement input axis (19) or the movement output axis (21) at least in a working condition of the rotary harrow (1).

3. A rotary harrow (1) according to claim 2, wherein the torque meter (12) includes a load cell (17) which is interposed between the central gearbox (8) and the central frame (2).

4. A rotary harrow (1) according to claim 2 or claim 3, wherein the torque meter (12) includes a load cell (17) of the electronic and/or hydraulic type.

5. A rotary harrow (1) according to any one of claims 2 to 4, wherein the torque meter (12) includes a load cell (17) of the shear beam or button type.

6. A rotary harrow (1) according to any one of claims 2 to 5, wherein the torque meter (12) is isostatic at least in the measuring state.

7. A rotary harrow (1) according to any one of claims 2 to 6, wherein the torque meter (12) comprises an upper plate (13a) and a lower plate (13b), of which one is secured to the central gearbox (8) and the other is secured to the central frame (2), the upper plate (13a) and the lower plate (13b) being secured to each other with hinge type constraints (14, 17) in accordance with two axes (X, Y) which are mutually parallel and substantially parallel with the movement input axis (19) or the movement output axis (21) of the central gearbox, one of the hinge type constraints (14, 17) including a load cell (17).

8. A rotary harrow (1) according to the preceding claim, wherein the other of the hinge type constraints (14) is positioned with respect to the corresponding movement input or output axis (19, 21) so as to minimize the torque generated with respect to the corresponding movement input or output axis by a thrust directed along this movement input or output axis.

9. A rotary harrow (1) according to any one of the preceding claims, wherein there is provided at least one sensor which is selected from a temperature sensor of the central gearbox (8) and at least one rotation sensor of a movement input axis (19, 22) or a movement output axis (21, 23) of the central gearbox (8) or of one of the secondary gearboxes (7).

10. A rotary harrow (1) according to any one of the preceding claims, wherein the central gearbox (8) which is supported on the central frame (2) is configured to be actuated by means of a PTO of an agricultural tractor.

11. A rotary harrow (1) according to any one of the preceding claims, wherein a connection between the gearboxes (7, 8) and between the central gearbox (8) and a power take-off of an agricultural tractor is brought about by means of universal joint shafts (9).

12. A rotary harrow (1) according to any one of the preceding claims, wherein for moving the lateral frames (3, 4) there are provided fluid-dynamic cylinders (11) between the central frame (2) and the respective lateral frames (3, 4).

13. A rotary harrow (1) according to any one of the preceding claims, wherein in the transport position the lateral frames (3, 4) are raised with an arrangement which is mutually parallel, with a minimal transverse spatial requirement of the rotary harrow (1).

14. A rotary harrow (1) according to any one of the preceding claims, wherein there are further provided three rotation sensors, one for each universal joint shaft (9), which control a possible intervention of torque limiters in the event of occurrences of over-consumption.

15. A rotary harrow (1) according to any one of the preceding claims, wherein in the rear portion of the rotary harrow (1), there is provided at least one roller (24), the position of which can be adjusted by means of hydraulic actuators (25) in order to vary the working depth of the implements (6).

## Patentansprüche

1. Kreiselegge (1) mit einem faltbaren Rahmen, wobei die Kreiselegge einen Zentralrahmen (2), der Flansche (10) trägt, die zum Einrichten einer Dreipunktbefestigung für einen hydraulischen Hub eines landwirtschaftlichen Traktors geeignet sind, und zwei Seitenrahmen (3, 4) aufweist, die um jeweilige Gelenke (5) am Zentralrahmen angelenkt sind und zwischen einer Betriebsstellung, in der die Seitenrahmen mit einer im Wesentlichen koplanaren Anordnung abgesenkt sind, und einer Transportstellung mit einer Anordnung, in der sie angehoben sind, geschwenkt werden können;
- wobei eine Mehrzahl von Rotoren mit jeweiligen Arbeitswerkzeugen (6) an jedem der Seitenrahmen (3, 4) befestigt sind, wobei die Rotoren durch jeweilige Nebengetriebe (7) angetrieben werden, die mit Bewegungsausgangsachsen (23) versehen sind, wobei die Nebengetriebe (7) wiederum eine Bewegung von einem Zentralgetriebe (8) aufnehmen, das an einer Halterung (15) des Zentralrahmens (2) befestigt ist;
- **dadurch gekennzeichnet, dass** zwei Näherungssensoren (27) zwischen dem Zentralgetriebe (8) und den seitlichen Kreuzgelenkwellen (9), die dessen Bewegungsausgänge mit den Nebengetrieben (7) verbinden, vorgesehen sind, wobei die Näherungssensoren (27) eingerichtet sind, um die Winkelposition der seitlichen Kreuzgelenkwellen (9) während eines Schließvorgangs der Kreiselegge (1) zu erfassen, um Brüche durch Verklemmen der Wellen zu verhindern.

2. Kreiselegge (1) nach Anspruch 1, wobei das im Zentralrahmen (2) gelagerte Zentralgetriebe (8) zumindest eine Bewegungseingangsachse (19) und zumindest eine Bewegungsausgangsachse (21) aufweist, wobei zwischen dem Zentralgetriebe (8) und dem Zentralrahmen (2) ein Drehmomentmesser (12) angeordnet ist, der angeordnet ist, um das Gegendrehmoment zwischen dem Zentralgetriebe (8) und dem Zentralrahmen (2), der es abstützt, in Bezug auf die Bewegungseingangsachse (19) oder die Bewegungsausgangsachse (21) zumindest in einem Betriebszustand der Kreiselegge (1) zu messen.

3. Kreiselegge (1) nach Anspruch 2, wobei der Drehmomentmesser (12) eine Kraftmesszelle (17) umfasst, die zwischen dem Zentralgetriebe (8) und dem Zentralrahmen (2) angeordnet ist.

4. Kreiselegge (1) nach Anspruch 2 oder 3, wobei der Drehmomentmesser (12) eine Kraftmesszelle (17) vom elektronischen und/oder hydraulischen Typ umfasst.

5. Kreiselegge (1) nach einem der Ansprüche 2 bis 4, wobei der Drehmomentmesser (12) eine Kraftmesszelle (17) vom Scherbalken- oder Knopftyp umfasst.

6. Kreiselegge (1) nach einem der Ansprüche 2 bis 5, wobei der Drehmomentmesser (12) zumindest im Messzustand isostatisch ist.

7. Kreiselegge (1) nach einem der Ansprüche 2 bis 6, wobei der Drehmomentmesser (12) eine obere Platte (13a) und eine untere Platte (13b) aufweist, von denen eine am Zentralgetriebe (8) und die andere am Zentralrahmen (2) befestigt ist, wobei die obere Platte (13a) und die untere Platte (13b) mit gelenkartigen Verbindungen (14, 17) in Übereinstimmung mit zwei Achsen (X, Y) aneinander befestigt sind, die zueinander parallel und im Wesentlichen parallel zur Bewegungseingangsachse (19) oder Bewegungsausgangsachse (21) des Zentralgetriebes sind, wobei eine der gelenkartigen Verbindungen (14, 17) eine Kraftmesszelle (17) umfasst.

8. Kreiselegge (1) nach dem vorhergehenden Anspruch, wobei die andere der gelenkartigen Verbindungen (14) in Bezug auf die entsprechende Bewegungseingangs- oder -ausgangsachse (19, 21) positioniert ist, um das Drehmoment zu minimieren, das in Bezug auf die entsprechende Bewegungseingangsachse oder -ausgangsachse durch einen entlang dieser Bewegungseingangsachse oder -ausgangsachse gerichteten Schub erzeugt wird.

9. Kreiselegge (1) nach einem der vorhergehenden Ansprüche, wobei zumindest ein Sensor vorgesehen ist, der aus einem Temperatursensor des Zentralgetriebes (8) und zumindest einem Drehzahlsensor einer Bewegungseingangsachse (19, 22) oder einer Bewegungsausgangsachse (21, 23) des Zentralgetriebes (8) oder eines Nebengetriebes (7) ausgewählt wird.

10. Kreiselegge (1) nach einem der vorhergehenden Ansprüche, wobei das am Zentralrahmen (2) gelagerte Zentralgetriebe (8) eingerichtet ist, um durch eine Zapfwelle eines landwirtschaftlichen Traktors angetrieben zu werden.

11. Kreiselegge (1) nach einem der vorhergehenden Ansprüche, wobei eine Verbindung zwischen den Getrieben (7, 8) und zwischen dem Zentralgetriebe (8) und einer Zapfwelle eines landwirtschaftlichen Traktors durch Kreuzgelenkwellen (9) hergestellt wird.

12. Kreiselegge (1) nach einem der vorhergehenden Ansprüche, wobei zum Bewegen der Seitenrahmen (3, 4) zwischen dem Zentralrahmen (2) und den jeweiligen Seitenrahmen (3, 4) fluiddynamische Zylinder (11) vorgesehen sind.

13. Kreiselegge (1) nach einem der vorhergehenden Ansprüche, wobei in der Transportstellung die Seitenrahmen (3, 4) mit einer zueinander parallelen Anordnung angehoben sind, wobei die Kreiselegge (1) einen minimalen Platzbedarf in Querrichtung aufweist.

14. Kreiselegge (1) nach einem der vorhergehenden Ansprüche, wobei ferner drei Drehzahlsensoren, jeweils einer für jede Kreuzgelenkwelle (9), vorgesehen sind, die einen möglichen Eingriff von Drehmomentbegrenzern im Falle einer Überlastung kontrollieren.

15. Kreiselegge (1) nach einem der vorhergehenden Ansprüche, wobei im hinteren Bereich der Kreiselegge (1) zumindest eine Walze (24) vorgesehen ist, deren Position durch hydraulische Stellantriebe (25) eingestellt werden kann, um die Arbeitstiefe der Arbeitswerkzeuge (6) zu variieren.

## Revendications

1. Herse rotative (1) à châssis pliable, la herse rotative comprenant un châssis central (2) qui porte des brides (10) pouvant former un attelage à trois points pour le relevage hydraulique d'un tracteur agricole, ainsi que deux châssis latéraux (3, 4) articulés au châssis central autour de charnières (5) respectives et pouvant pivoter entre une position de travail, dans laquelle les châssis latéraux sont abaissés selon une disposition sensiblement coplanaire, et une position de transport, dans laquelle ils sont relevés ;
dans laquelle une pluralité de rotors munis d'outils (6) respectifs est montée sur chacun des châssis latéraux (3, 4), les rotors étant entraînés au moyen de boîtiers de transmission secondaires (7) respectifs qui sont pourvus d'axes de sortie de mouvement (23), les boîtiers de transmission secondaires (7) étant eux-mêmes entraînés par un boîtier de transmission central (8) monté sur un support (15) du châssis central (2) ;
**caractérisée en ce que** deux capteurs de proximité (27) sont prévus entre le boîtier de transmission central (8) et les arbres à cardan latéraux (9) qui relient les sorties de mouvement de celui-ci aux boîtiers de transmission secondaires (7), les capteurs de proximité (27) étant configurés pour détecter la position angulaire des arbres à cardan latéraux (9) pendant une phase de fermeture de la herse rotative (1) afin d'éviter les ruptures causées par un blocage des arbres.

2. Herse rotative (1) selon la revendication 1, dans laquelle le boîtier de transmission central (8), qui est supporté dans le châssis central (2), comporte au moins un axe d'entrée de mouvement (19) et au moins un axe de sortie de mouvement (21), un couplemètre (12) étant intercalé entre le boîtier de transmission central (8) et le châssis central (2), lequel est disposé de manière à mesurer le contre-couple entre le boîtier de transmission central (8) et le châssis central (2) qui le supporte, par rapport à l'axe d'entrée de mouvement (19) ou à l'axe de sortie de mouvement (21), au moins dans un état de fonctionnement de la herse rotative (1).

3. Herse rotative (1) selon la revendication 2, dans laquelle le couplemètre (12) comprend une cellule de charge (17) intercalée entre le boîtier de transmission central (8) et le châssis central (2).

4. Herse rotative (1) selon la revendication 2 ou la revendication 3, dans laquelle le couplemètre (12) comprend une cellule de charge (17) de type électronique et/ou hydraulique.

5. Herse rotative (1) selon l'une quelconque des revendications 2 à 4, dans laquelle le couplemètre (12) comprend une cellule de charge (17) de type à poutre de cisaillement ou à bouton.

6. Herse rotative (1) selon l'une quelconque des revendications 2 à 5, dans laquelle le couplemètre (12) est isostatique au moins à l'état de mesure.

7. Herse rotative (1) selon l'une quelconque des revendications 2 à 6, dans laquelle le couplemètre (12) comprend une plaque supérieure (13a) et une plaque inférieure (13b), dont l'une est fixée au boîtier de transmission central (8) et l'autre au châssis central (2), la plaque supérieure (13a) et la plaque inférieure (13b) étant reliées l'une à l'autre par des articulations à charnière (14, 17) selon deux axes (X, Y) qui sont mutuellement parallèles et sensiblement parallèles à l'axe d'entrée de mouvement (19) ou à l'axe de sortie de mouvement (21) du boîtier de transmission central, l'une des articulations à charnière (14, 17) comprenant une cellule de charge (17).

8. Herse rotative (1) selon la revendication précédente, dans laquelle l'autre des articulations à charnière (14) est positionnée par rapport à l'axe d'entrée ou de sortie de mouvement correspondant (19, 21) de manière à minimiser le couple généré par rapport à l'axe d'entrée ou de sortie de mouvement correspondant par une poussée dirigée le long de cet axe d'entrée ou de sortie de mouvement.

9. Herse rotative (1) selon l'une quelconque des revendications précédentes, dans laquelle est prévu au moins un capteur choisi parmi un capteur de température du boîtier de transmission central (8) et au moins un capteur de rotation d'un axe d'entrée de mouvement (19, 22) ou d'un axe de sortie de mouvement (21, 23) du boîtier de transmission central (8) ou de l'un des boîtiers de transmission secondaires (7).

10. Herse rotative (1) selon l'une quelconque des revendications précédentes, dans laquelle le boîtier de transmission central (8), qui est supporté par le châssis central (2), est configuré pour être entraîné au moyen d'une prise de force d'un tracteur agricole.

11. Herse rotative (1) selon l'une quelconque des revendications précédentes, dans laquelle une liaison entre les boîtiers de transmission (7, 8) et entre le boîtier de transmission central (8) et une prise de force d'un tracteur agricole est assurée au moyen d'arbres à cardan (9).

12. Herse rotative (1) selon l'une quelconque des revendications précédentes, dans laquelle, pour déplacer les châssis latéraux (3, 4), des vérins fluidiques (11) sont prévus entre le châssis central (2) et les châssis latéraux (3, 4) respectifs.

13. Herse rotative (1) selon l'une quelconque des revendications précédentes, dans laquelle, en position de transport, les châssis latéraux (3, 4) sont relevés selon une disposition mutuellement parallèle, avec un encombrement transversal minimal de la herse rotative (1).

14. Herse rotative (1) selon l'une quelconque des revendications précédentes, dans laquelle sont en outre prévus trois capteurs de rotation, un pour chaque arbre à cardan (9), qui contrôlent une éventuelle intervention de limiteurs de couple en cas de surconsommation.

15. Herse rotative (1) selon l'une quelconque des revendications précédentes, dans laquelle, dans la partie arrière de la herse rotative (1), est prévu au moins un rouleau (24), dont la position peut être réglée au moyen d'actionneurs hydrauliques (25) afin de faire varier la profondeur de travail des outils (6).
